# EUROPEAN PATENT APPLICATION

(11) **EP 3 657 419 A1**
(43) Date of publication of application: **27.05.2020**
(21) Application number: 18208172.9
(22) Date of filing: 23.11.2018
(51) Int. Cl.: G06Q 20/40

(54) **TRANSACTION SYSTEM CACHE MANAGEMENT**

(71) Applicant: Mastercard International Incorporated, Purchase NY 10577 (US)
(72) Inventor: GROARKE, Peter, Dublin 18 (IE); HOSNY, Ahmed, Dublin 18 (IE); NISTOR, Ionut, Dublin 7 (IE)
(74) Representative: Lawrence, Richard Anthony

(57) **Abstract**

A computing node comprises a processor and a transaction cache. The transaction cache comprises transaction data records for a plurality of account numbers. Each transaction data record comprises a plurality of transaction data elements for a transaction including the account number for that transaction. The computing node is adapted to receive an authorisation request for a transaction pending authorisation from a transaction network, use the transaction data records in the transaction cache to calculate function values for one or more predetermined functions for the account number associated with the transaction pending authorisation, wherein the function values are determined from the transaction data elements of the transaction data records for that account number, and provide the calculated function values to the transaction network. If the transaction pending authorisation is authorised, the computing node adds a transaction data record for that transaction to the transaction cache. A transaction system comprising such computing nodes and a method of operating a transaction cache in a transaction system are also described.

## Description

### TECHNICAL FIELD

The present disclosure relates to transaction system cache management, and in embodiments to use of transaction caches for use in a transaction network.

### BACKGROUND

Transactions typically require authorisation to ensure that they are being carried out by a legitimate party on a legitimate basis. Such authorisation is typically carried out by checking of user credentials, and by checking that the characteristics of the transaction are as expected. This can be straightforward in some contexts - for example, where it is simply necessary to check that presented credentials are correct for the expected transacting party - but more complex in others, where care needs to be taken to ensure that transaction characteristics are as expected. This is the case for a payment card scheme.

A payment card scheme - a payment network linked to a payment card - is typically based one of two models: a three-party model (adopted by American Express) or a four-party model (adopted by Visa and Mastercard). The relevant parties in the four-party model include a merchant, an acquirer, an issuer and a cardholder. Typically, the four party model of a credit card or debit card purchase involves an exchange of authorisation request and response messages between the parties prior to the settlement of funds between the cardholder and the merchant. The messages may include transaction data such as a primary account number, a transaction amount, a merchant identifier, and a date and time of the transaction.

The decision to approve or decline an authorisation request message is often made once a fraud or risk analysis is carried out. Current methods of fraud or risk analysis involve analysing the transaction data within the authorisation request message in conjunction with previous spending patterns of the cardholder by using rules engines. An important component of analysing a particular transaction is the ability to track the spend across multiple transactions for a given filter, which is known as a velocity. Currently, velocity is tracked by summing the amount spent for each and every velocity. However, this method becomes computationally intensive and slow as the number of distinct velocity updates increases. Ideally, transaction scoring happens in the milliseconds timeframe. Current methodologies for computing velocities struggle to meet the required timeframe for transaction scoring due to their computationally intensive processing requirements and therefore presents problems for fraud or risk analysis carried out within payment card schemes.

The present disclosure has been devised to mitigate or overcome at least some of the above-mentioned problems.

### SUMMARY OF THE DISCLOSURE

According to a first aspect of the present disclosure there is provided a computing node comprising a processor and a transaction cache, wherein the transaction cache comprises transaction data records for a plurality of account numbers, wherein each transaction data record comprises a plurality of transaction data elements for a transaction including the account number for that transaction, wherein the computing node is adapted to perform the following processes: receive an authorisation request for a transaction pending authorisation from an transaction network; use the transaction data records in the transaction cache to calculate function values for one or more predetermined functions for the account number associated with the transaction pending authorisation, wherein the function values are determined from the transaction data elements of the transaction data records for that account number; provide the calculated function values to the transaction network; and if the transaction pending authorisation is authorised, add a transaction data record for that transaction to the transaction cache.

One of the transaction data elements in a transaction data record may be a transaction time. One of the transaction data elements in a transaction data record may be a transaction amount, and the one or more predetermined functions are transaction velocities, wherein a transaction velocity is a sum of transaction amounts for all transactions for an account number conforming with a velocity rule for that transaction velocity in a predetermined period of time.

One of the transaction data elements may define a purchased product or service type, wherein one or more of the velocity rules relates to a defined purchased product or service type. One of the transaction data elements may define a merchant type, wherein one or more of the velocity rules relates to a defined merchant type. One of the transaction data elements may define a transaction type, wherein one or more of the velocity rules relates to a transaction type, such as a Cardholder Not Present transaction.

One or more of the transaction data elements may be defined by ISO 8583.

The computing node may further comprise a fraud scoring system for the transaction network, wherein the fraud scoring system uses the transaction velocities in providing a fraud score for the transaction pending authorisation. This fraud scoring system may be adapted to provide the fraud score to the transaction network for use in determining whether to authorise the transaction pending authorisation, or it may be adapted to refuse authorisation for the transaction pending authorisation on behalf of the transaction network if the fraud score is within predetermined parameters for refusal.

In a second aspect, the disclosure provides a transaction network adapted to receive transactions pending authorisation from transaction network terminals and to route them for authorisation by or on behalf of payment device issuers, the transaction network comprising one or more computing nodes as claimed in any preceding claim. Such a transaction network may process transactions in accordance with EMV standards.

In a third aspect, the disclosure provides a method of operating a transaction cache in a transaction system, wherein the transaction cache is used for providing information for use in authorisation of transactions and comprises transaction data records for a plurality of account numbers, wherein each transaction data record comprises a plurality of transaction data elements for a transaction including the account number for that transaction, the method comprising: receiving an authorisation request for a transaction pending authorisation from a transaction network; using the transaction data records in the transaction cache to calculate function values for one or more predetermined functions for the account number associated with the transaction pending authorisation, wherein the function values are determined from the transaction data elements of the transaction data records for that account number; providing the calculated function values to the transaction network; and if the transaction pending authorisation is authorised, adding a transaction data record for that transaction to the transaction cache.

One of the transaction data elements in a transaction data record may be a transaction time and another one of the transaction data elements may be a transaction amount, and wherein the one or more predetermined functions may be transaction velocities, wherein a transaction velocity is a sum of transaction amounts for all transactions for an account number conforming with a velocity rule for that transaction velocity in a predetermined period of time.

### BRIEF DESCRIPTION OF THE DRAWINGS

One or more embodiments of the disclosure will now be described, by way of example only, with reference to the accompanying drawings, in which:
Figure 1 is a schematic diagram illustrating a typical four-party model used in payment interactions between entities operating in a card scheme;
Figure 2a is a schematic diagram illustrating a request leg of a conventional velocity tracking process;
Figure 2b is a schematic diagram illustrating a response leg of a conventional velocity tracking process;
Figure 3a is a schematic diagram illustrating a request leg of a velocity tracking process in accordance with an embodiment of the disclosure;
Figure 3b is a schematic diagram illustrating a response leg of a velocity tracking process in accordance with an embodiment of the disclosure; and
Figure 4 is a depiction of a computing node in accordance with an embodiment of the disclosure.

### DETAILED DESCRIPTION

General and specific embodiments of the disclosure will be described below with reference to the Figures.

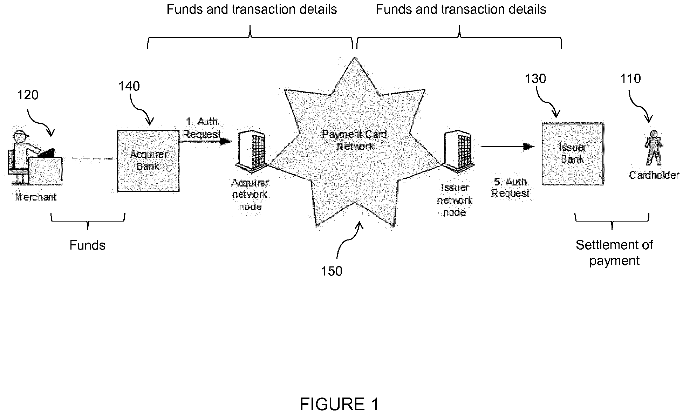

Figure 1 is a schematic diagram of a typical four-party model or four-party payment transaction scheme. The diagram illustrates the entities present in the model and the interactions occurring between entities.

Normally, card schemes - payment networks linked to payment cards - are based on one of two models: a three-party model (adopted by American Express) or a four-party model (adopted by Visa and Mastercard). For the purposes of this document, the four-party model 100 is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central payment card network 150 - interactions between the issuer 130 and the acquirer 140 are routed via the payment card network 150. The payment card network 150 enables a merchant 120 associated with one particular bank (acquirer 140) to accept payment transactions from a cardholder 110 associated with a different bank (issuer 130).

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the payment card network 150 to authorise the transaction. Should the transaction be considered abnormal by the issuer 130, the cardholder 110 may be required to undergo a verification process to verify their identity and the details of the transaction. Once the verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the payment card network 150. Upon receipt of these transaction details, the issuer 130 provides the settlement funds to the payment card network 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

Embodiments of the disclosure relate to operation of a transaction cache by a computing node in such a transaction system. This computing node may be associated with a fraud scoring process operated by a fraud scoring service. Such a service may provide a fraud score that can be used by the issuer (or by another entity, such as a merchant, an acquirer, or a card scheme on behalf of the issuer) to assist in determining whether or not a transaction should be authorised or declined. Such fraud scoring services typically use 'velocities' to provide the fraud score.

The term 'velocity' is here used to indicate a spend amount for a card, which may be across multiple transactions, for a given filter against time. These filters may be a transaction class, such as spend on fuel, or a transaction category, such as customer not present (CNP) transactions. The amount spent in a given filter, for example spending on petrol, is summed for one or more time windows once each transaction is completed. Typically, velocity checking involves determining whether a predetermined total spend for the filter category has occurred within a given time interval. For example, no more than a particular amount would be expected to be spent on a particular type of product, such as fuel, within a 24 hour period. It would become suspicious if more than the expected amount was spent on fuel. Typically velocities are tracked by PAN, and transaction data elements that may be used for velocity checking include the transaction amount and transaction time, and any data element that may be used to establish a filter (such as merchant type). Other transaction data elements that may be used are those relating to POS type and location (e.g. mail order, telephone order or e-commerce), merchant identifier, merchant location and transaction currency code.

Transaction data elements are defined in general terms by ISO 8583, which is an international standard for financial transaction card originated interchange messaging. Many fields are defined so that they will be used in a common way by everyone adhering to the standard, whereas others are reserved for private use - for example, for providing transaction system or card scheme specific solutions.

The transaction data elements include a number of time elements - potentially any of these could be used for identifying a transaction time in embodiments of the disclosure, either for use in velocity rules or for use in cache management. Possible candidates include the ISO standard field DE7 (transmission date and time), which is the date and time that a message is entered into the transaction network. The system time as at the issuer fraud scoring value added service may be used. Date and time may be expressed in Coordinated Universal Time (UTC) to allow them to be used effectively across an extended system.

In one approach, a fraud probability score can be provided to the issuer by the fraud scoring service to support the issuer in determining whether to authorise a transaction. This can be done by using a data element in the authorization request message that is sent to the issuer. For example, DE48.75 in the Mastercard CIS file format contains two fraud probability scores to be provided to the issuer - other approaches can be used in file formats used by other card schemes, or by repurposing other data fields defined in EMV standards.

Alternatively, a fraud scoring service can be configured to decline the authorization request on the issuer's behalf if the fraud probability exceeds a threshold - an "on behalf" decline. In such cases, the issuer may specify that if the determined fraud probability is 80% or greater, then the fraud scoring service should stand-in on behalf of the issuer and decline the transaction. With this arrangement, there is the possibility that some transactions will be declined by the issuer and some by the fraud scoring service (though only the issuer will be able to authorise a transaction).

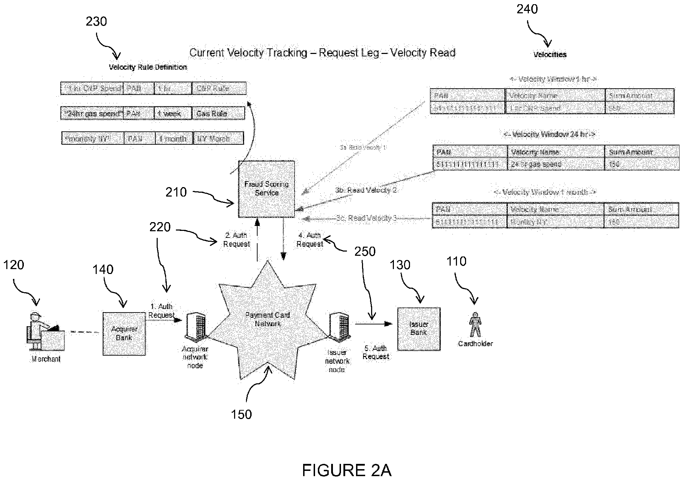

Figure 2a is a schematic diagram illustrating a request leg of a conventional velocity tracking process. In order to help to prevent fraud, the payment card network 150 is here connected to a fraud scoring service 210. After a transaction has been established at a terminal of the transaction system, an authorisation request originates from the merchant. Before reaching the issuer 130, the authorisation request 220 is received by the fraud scoring service 210 via the payment card network 150. One or more velocity rules 230 are defined by the fraud scoring service 210.

For example, system-wide (default) fraud scoring rules may be set up by the card scheme or transaction infrastructure provider. In addition, an issuer can specify its own customised rules. The system may have differentiated rules for each Bank Identification Number (BIN), which is included at the beginning of the PAN. For example, an issuer may have a more tolerant rule for high value transactions for a platinum card BIN compared with a regular card BIN.

A velocity rule may comprise a velocity rule identifier, a primary account number and a time window over which to aggregate. The rule can specify a condition and an action. For example, if the velocity exceeds a certain amount then decline the transaction or increase the probability if it being fraudulent and notify the issuer. A typical velocity rule may be, for example, the spend amount on gas in the time window of one week.

The type of transaction is based on several data elements defined by the IS08583 standard message format. Some exemplary data elements used by the applicant are MTI (message type indicator, defining message type, origin and purpose), DE3 (processing code, indicating transaction type) and DE61 (a reserved code relating to card verification). These data elements can be used to determine whether, for example, the transaction is an ATM withdrawal, a POS terminal transaction, an e-commerce transaction, a telephone order transaction, and whether the transaction is a credit card or a debit card transaction.

The type of goods or services a business provides is described by merchant category codes (MCCs), in the form of a four-digit identifier - this is DE18 in IS08583. The codes themselves and their classification are set in IS018245, which relates specifically to this purpose.

One or more velocities 240 are separated by velocity windows (e.g. 1 hour, 24 hours, 1 month), wherein each recording in each velocity comprises the name of the velocity, a primary account number, and a sum amount.

Each velocity 240 is read, one by one, by the fraud scoring service 210 and compared to the velocity rules 230. A fraud probability score is generated by the fraud scoring service 210 largely determined by whether or not each of the sum amounts in the one or more computed velocities satisfies the one or more velocity rules. An authorisation request is sent to an entity known as an authorisation service bus (ASB). The authorisation request is then sent to a value added service for which the transaction qualifies. The fraud scoring service 210 may act as an authorisation value added service. The fraud scoring service can then either inject the fraud probability score into the request for sending to the issuer, or decline the request if it breaches a threshold. The authorisation request 250 is then sent to the issuer 130 via the payment card network 150 with the fraud score.

The specifics of fraud scoring are not the subject of this disclosure and are not discussed further here.

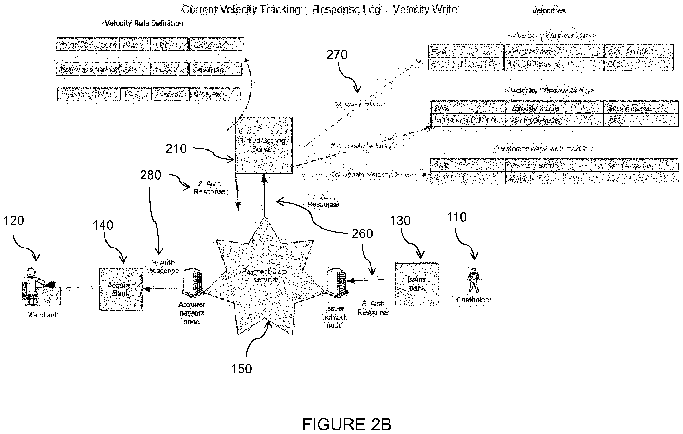

Figure 2b illustrates a conventional response leg of a velocity tracking process. Upon approval of the authorisation request 250 by the issuer 130, an authorisation response 260 is submitted to the fraud scoring service 210 via the payment card network 150. Each velocity is then updated 270 and the authorisation response 280 is sent to the acquirer 140 via the payment card network 150.

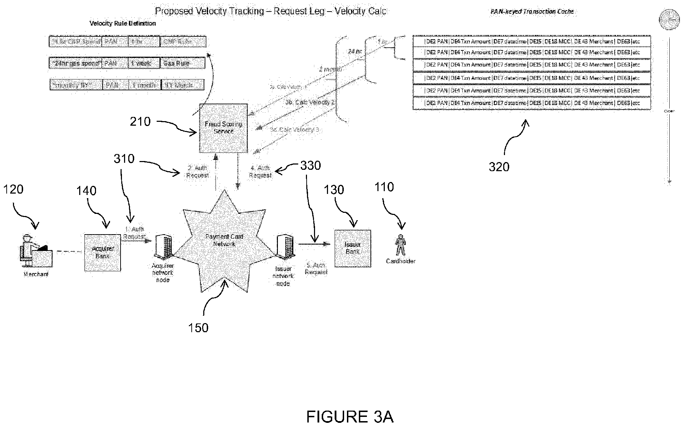

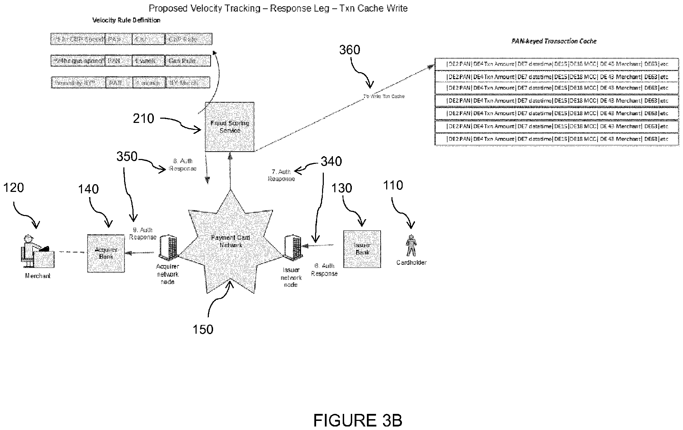

The present disclosure provides an improved method of tracking velocities and is now described with reference to Figures 3a and 3b.

In accordance with an embodiment of the disclosure, Figure 3a illustrates a request leg of a velocity tracking process.

First an authorisation request 310 is sent from the acquirer 140 to the fraud scoring service 210 via the payment card network 150. One or more velocity rules 230 are defined by the fraud scoring service 210. As before, a velocity rule may comprise a name, a primary account number, a time window and a maximum spend amount. A typical velocity rule may be, for example, a maximum spend amount on gas in the time window of one week.

A transaction cache 320 is stored in a location connected to the payment card network 150 and the fraud scoring service 210. It may be provided by any appropriate storage technology for a cache, whether a simple cache in one memory storage device or a more complex scalable structure such as an in-memory data grid (e.g. Pivotal GemFire), wherein the transaction cache comprises one or more transaction records in the form of a plurality of transaction data elements. These will typically be ordered by date and time.

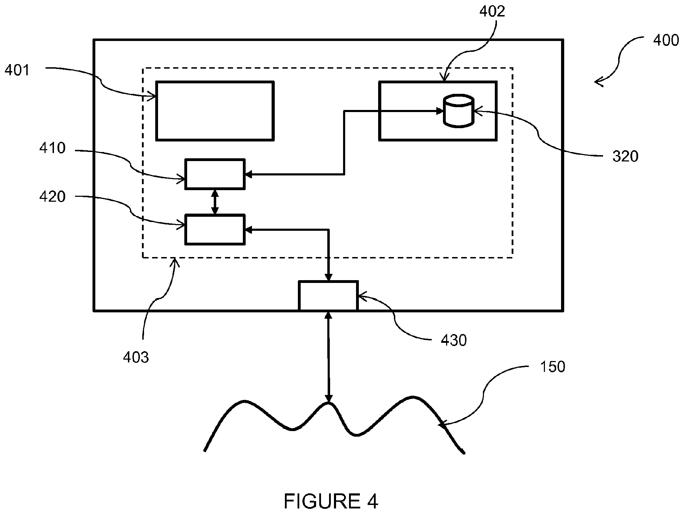

A computing node to control the transaction cache 320 is shown in Figure 4. The computing node 400 here comprises a processing capability 401 and a memory capability 402 comprising the transaction cache 320, the processing capability 401 and the memory capability 402 between them defining a computing environment 403. The computing environment 403 here runs a cache management service 410 and a fraud scoring service 420. The computing node 400 is connected to the payment card network 150 through a networking connection 430, and will receive authorisation requests pending approval from the payment card network 150 so that they can be assessed by the fraud scoring service 420 using the transaction cache 320. The processing capability 401 and the memory capability 402 may be provided by one physical server with associated storage, or may be provided by multiple computing devices networked together.

Each velocity is then computed from the relevant transaction records in the transaction cache for a time window defined for that velocity. A transaction record may for example comprise a primary account number of a user, a transaction amount, the date and time of transaction, and data elements used to determine whether that transaction conforms to a given filter (for example, merchant type, or transaction type) - this is discussed further below. Each one of the velocities comprises a sum amount, and each of the sum amounts in the one or more computed velocities are used to obtain a fraud score - this will be largely determined by whether each of the one or more velocity rules has been satisfied. The authorisation request 330 is sent to the issuer 130 via the payment card network 150 with the fraud score to assist the issuer 130 in its determination of whether to authorise the transaction.

Using this approach, computing of each velocity is fast and thus the approach taken in the present disclosure improves the speed and efficiency of fraud scoring. Furthermore, the transaction cache may be tailored to include only the relevant and required data - this will include the PAN, transaction amount and date/time information but beyond that may only need to include specific data elements (such as those indicating merchant type, spend type or transaction type) used to identify whether or not a transaction meets a velocity rule. In this way, only the transaction data elements that are significant from a fraud perspective would need to be stored in the transaction cache. However, a particularly significant benefit is obtained in maintenance of the transaction cache, as discussed below.

The transaction cache may be associated with a pruning mechanism by which the transaction cache may be pruned of transactions which are sufficiently old that they will not contribute to any active velocity (for example, transactions sufficiently older than a day could be removed if no velocity extended back beyond the last 24 hours).

Figure 3b illustrates a response leg of a velocity tracking process in accordance with an embodiment of the disclosure. Upon approval of the authorisation request by the issuer 130, an authorisation response 340 is provided to the payment card network 150, and may be used by the payment card network 150 or the fraud scoring value added service 210 to update the transaction cache. The transaction cache is then updated 360 with the transaction data elements of the present transaction ordered by date and time. This means that any velocity is a function on the transaction cache and, advantageously, only one update of the transaction cache is required during the response leg. In the conventional arrangement of Figure 2b, each individual velocity for which the transaction qualifies by filter must be re-summed to include the newly authorised transaction - this may be a particularly time consuming process. Then, the authorisation response 350 is also sent to the acquirer 140 via the payment card network 150 and hence to the merchant.

Many modifications may be made to the above examples without departing from the scope of the present disclosure as defined in the accompanying claims.

## Claims

1. A computing node comprising a processor and a transaction cache, wherein the transaction cache comprises transaction data records for a plurality of account numbers, wherein each transaction data record comprises a plurality of transaction data elements for a transaction including the account number for that transaction, wherein the computing node is adapted to perform the following processes:
receive an authorisation request for a transaction pending authorisation from an transaction network;
use the transaction data records in the transaction cache to calculate function values for one or more predetermined functions for the account number associated with the transaction pending authorisation, wherein the function values are determined from the transaction data elements of the transaction data records for that account number;
provide the calculated function values to the transaction network; and
if the transaction pending authorisation is authorised, add a transaction data record for that transaction to the transaction cache.

2. The computing node as claimed in claim 1, wherein one of the transaction data elements in a transaction data record is a transaction time.

3. The computing node as claimed in claim 2, wherein one of the transaction data elements in a transaction data record is a transaction amount, and wherein the one or more predetermined functions are transaction velocities, wherein a transaction velocity is a sum of transaction amounts for all transactions for an account number conforming with a velocity rule for that transaction velocity in a predetermined period of time.

4. The computing node as claimed in claim 3, wherein one of the transaction data elements defines a purchased product or service type, and wherein one or more of the velocity rules relates to a defined purchased product or service type.

5. The computing node as claimed in claim 3 or claim 4, wherein one of the transaction data elements defines a merchant type, and wherein one or more of the velocity rules relates to a defined merchant type.

6. The computing node as claimed in any of claims 3 to 5, wherein one of the transaction data elements defines a transaction type, and wherein one or more of the velocity rules relates to a transaction type.

7. The computing node of claim 6, wherein the transaction type is a Cardholder Not Present transaction.

8. The computing node as claimed in any of claims 3 to 7, wherein one or more of the transaction data elements is defined by ISO 8583.

9. The computing node as claimed in any of claims 3 to 8, wherein the computing node further comprises a fraud scoring system for the transaction network, wherein the fraud scoring system uses the transaction velocities in providing a fraud score for the transaction pending authorisation.

10. The computing node as claimed in claim 9, wherein the fraud scoring system is adapted to provide the fraud score to the transaction network for use in determining whether to authorise the transaction pending authorisation.

11. The computing node as claimed in claim 9, wherein the fraud scoring system is adapted to refuse authorisation for the transaction pending authorisation on behalf of the transaction network if the fraud score is within predetermined parameters for refusal.

12. A transaction network adapted to receive transactions pending authorisation from transaction network terminals and to route them for authorisation by or on behalf of payment device issuers, the transaction network comprising one or more computing nodes as claimed in any preceding claim.

13. The transaction network of claim 12, wherein the transaction network processes transactions in accordance with EMV standards.

14. A method of operating a transaction cache in a transaction system, wherein the transaction cache is used for providing information for use in authorisation of transactions and comprises transaction data records for a plurality of account numbers, wherein each transaction data record comprises a plurality of transaction data elements for a transaction including the account number for that transaction, the method comprising:
receiving an authorisation request for a transaction pending authorisation from a transaction network;
using the transaction data records in the transaction cache to calculate function values for one or more predetermined functions for the account number associated with the transaction pending authorisation, wherein the function values are determined from the transaction data elements of the transaction data records for that account number;
providing the calculated function values to the transaction network; and
if the transaction pending authorisation is authorised, adding a transaction data record for that transaction to the transaction cache.

15. The method of claim 14, wherein one of the transaction data elements in a transaction data record is a transaction time and another one of the transaction data elements is a transaction amount, and wherein the one or more predetermined functions are transaction velocities, wherein a transaction velocity is a sum of transaction amounts for all transactions for an account number conforming with a velocity rule for that transaction velocity in a predetermined period of time.
